# EUROPEAN PATENT APPLICATION

(11) **EP 2 288 235 A2**
(43) Date of publication of application: **23.02.2011**
(21) Application number: 10170886.5
(22) Date of filing: 27.07.2010
(51) Int. Cl.: H05B 33/08

(54) **LED lighting equipment**

(30) Priority: 29.07.2009 JP 2009176307
(71) Applicant: Toshiba Lighting & Technology Corporation, Yokosuka-shi Kanagawa (JP)
(72) Inventor: Hiramatsu, Takuro, Yokosuka-shi Kanagawa (JP); Kamata, Masahiko, Yokosuka-shi Kanagawa (JP); Kubota, Hiroshi, Yokosuka-shi Kanagawa (JP); Terasaka, Hiroshi, Yokosuka-shi Kanagawa (JP); Hiraoka, Toshiyuki, Yokosuka-shi Kanagawa (JP)
(74) Representative: O'Connell, David Christopher

(57) **Abstract**

Certain embodiments provide an LED lighting equipment including a lighting main body (21). An LED power device (25) has a DC power source (DC) and a DC-DC converter having an input terminal (t1, t2) connected to the DC power source (DC) and the DC-DC converter having an output terminals8 (t3, t4). An LED light source (22) has a board (22a) and a plurality of LED packages (LeP), each including a plurality of LED chips (Ch) connected in series. The LED packages (LeP) are mounted on the board (22a) and connected in series to the output terminal (t3, t4) of the DC-DC converter.

## Description

### FIELD

Embodiments described herei.n relate generally to LED lighting equipment.

### BACKGROUND

LED lighting equipment includes an LED package as a source of light mounted on a lighting main body. The LED package includes a plurality of LED chips. An LED power device of the LED lighting equipment is mounted on the lighting main body. Typically the LED package is driven by DC as compared with a traditional incandescent lamp or a compact fluorescent lamp.

Since the LED lighting equipment draws significant current to produce the desired light flux, the LED package generates heat. This heat must be dissipated, because the luminance efficiency of the LED chips falls off when the temperature of the LED chips increases. Furthermore, the LED power device generates heat as it drives Lhe LED package. Thus, it is helpful to control the generation of heat in an LED power device.

### BRIEF DESCRIPTION OF THE DRAWINGS

Fig. 1 is a vertical cross-sectional view of a LED lamp using an LED power device of the a first embodiment;
Fig. 2 is a plan view of an LED light source of the LED lamp;
Fig. 3 is a view showing a frame format of an LED package;
Fig. 4 is a circuit diagram showing an LED power device;
Fig. 5 is a graph showing the relationship between the DC output voltage of a DC power source and the AC output voltage;
Fig. 6 is a plan view of a LED light source of the LED lamp according to the second embodiment;
Fig. 7 is a circuit diagram showing an LED power device according to the second embodiment; and
Fig. 8 is a graph showing the relationship between the DC output voltage of a DC power source and the AC output voltage according to the second embodiment.

### DETAILED DESCRIPTION

Certain embodiments provide an LED lighting equipment including a lighting main body (21). An LED power device (25) has a DC power source (DC) and a DC-DC converter having an input terminal (t1, t2) connected to the DC power source (DC) and the DC-DC converter having an output terminal (t3, t4). An LED light source (22) has a board (22a) and a plurality of LED packages (LeP), each including a plurality of LED chips (Ch) connected in series. The LED packages (LeP) are mounted on the board (22a) and connected in series to the output terminal (t3, t4) of DC-DC converter.

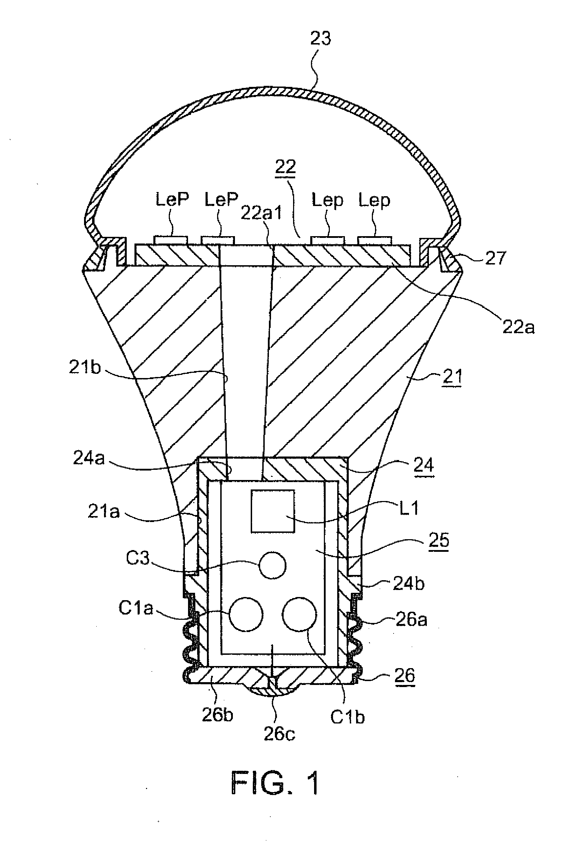

In Figs. 1 to 3, a LED lamp using the above-described LED power device is shown.

The LED lamp is provided with: a lighting main body having a heat dissipation member 21 and a case 24 attached to one end of the heat dissipation member 21; a base 26 attached to one end of the case 24; an LED module substrate 22, which is an LED light source, attached to the other end of the heat dissipation member 21; a globe 23 covering the LED module substrate 22; and the LED power device 25.

The heat dissipation member 21 is provided with: a heat dissipation member main body whose diameter is gradually increased from the base 26 on one end to the LED module substrate 22 on the other end; and a plurality of heat dissipation fins formed on the outer circumferential surface of the heat dissipation member main body. The heat dissipation member main body and the heat dissipation fins are formed, integrally with each other, of metallic material such as aluminum having a satisfactory heat conductivity, resin material or the like.

In the heat dissipation member main body has, on the other end, an attachment recess portion to which the LED module substrate 22 is attached. The one end of the heat dissipation member main body has a fit recess portion 21a into which the case 24 is inserted. Moreover, the heat dissipation member main body has an insertion through-hole 21b that communicates with the attachment recess portion 21a. Furthermore, on a circumferential portion on the other end of the heat dissipation member main body, a groove portion 37 is formed along the circumference to face one end of the globe 23.

The heat dissipation fins are obliquely formed such that the amount of protrusion thereof in a radial direction is gradually increased from the one end to the other end of the heat dissipation member main body. The heat dissipation fins are formed and substantially evenly spaced in a circumferential direction of the heat dissipation member main body.

The insertion through-hole 21b is formed such that its diameter gradually increases from the case 24 to the LED module substrate 22.

A ring 27 for reflecting light diffused downward from the globe 23 is attached to the groove portion 37.

The case 24 is formed of an insulating material such as PBT resin and is substantially cylindrically shaped to fit the shape of the fit recess portion 21a. The one end of the case 24 is blocked by a blocking plate serving as a case blocking portion; in the blocking plate, a communication hole 24a has substantially the same diameter as the insertion through-hole 21b and communicates with the insertion through-hole 21b. In the outer circumferential surface of an intermediate portion between the one end and the other end of the case 24, a flange portion 24b serves as an insulating portion to insulate the area between the main body of the heat dissipation member 21 and the base 26 and is continuously formed to protrude in a radial direction around the circumference.

The base 26 is E26 type; it is provided with: a cylindrical shell 26a having screw threads that are screwed into the lamp socket of an unillustrated lighting fitting; and an eyelet 26c that is formed via an insulating portion 26b in the top portion on one end of the shell 26a.

The shell 26a is electrically connected to a power supply; inside the shell 26a, between the shell 26a and the case 24, an unillustrated power line supplies power to the LED power device 25 from the shell 26a.

The eyelet 26c is electrically connected to an unillustrated ground potential and the ground potential of the LED power device 25 via a lead wire 44.

In the LED module substrate 22, over a substrate 22a that is disc-shaped in a plan view, a plurality of LED packages LeP are mounted. The substrate 22a is formed of metallic material such as aluminum having satisfactory heat dissipation In addition, an insulating substrate such as a common printed substrate or a ceramics substrate may be used as the substrate 22a. The substrate 22a is fixed to the heat dissipation member with an unillustrated screw or the like such that then surface opposite from the surface where the LED packages LeP are mounted makes close contact with the heat dissipation member. In the substrate 22a, in a position slightly displaced with respect to the center position, an interconnection hole 22a1 communicates with the insertion through-hole 21b of the heat dissipation member. The substrate 22a may be bonded to the heat dissipation member with a silicon adhesive having excellent heat conduction or the like.

Through the interconnection hole 22a1, unillustrated wiring connects electrically between the lighting circuit of the LED power device 25 and the LED module substrate 22. In the vicinity of the interconnection hole 22a1, an unillustrated connector receiving portion for connecting a connector disposed at an end portion of the wiring is mounted on the substrate 22a.

On the outer edge portion of the LED module substrate 22, the LED packages LeP are disposed substantially spa ced on the same circumference having their center in the center position of the LED module substrate 22.

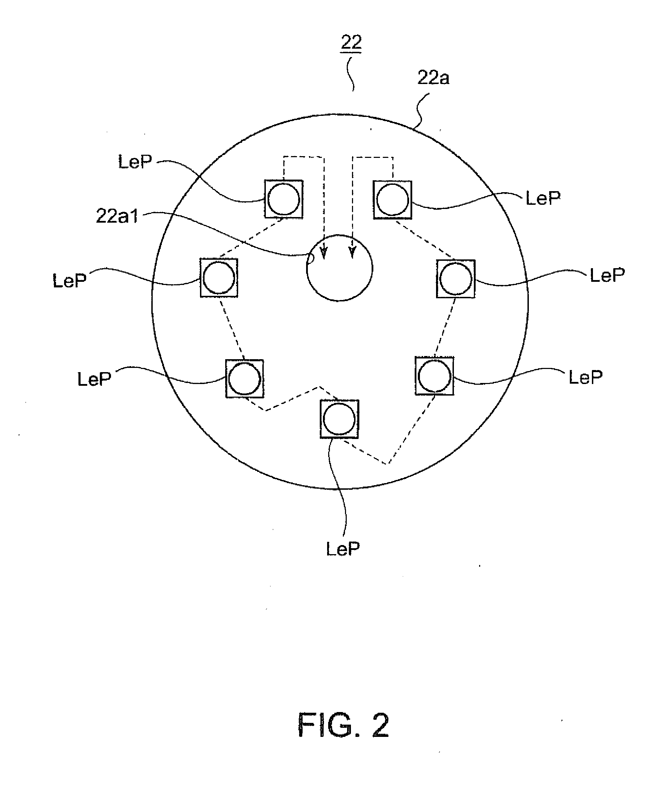

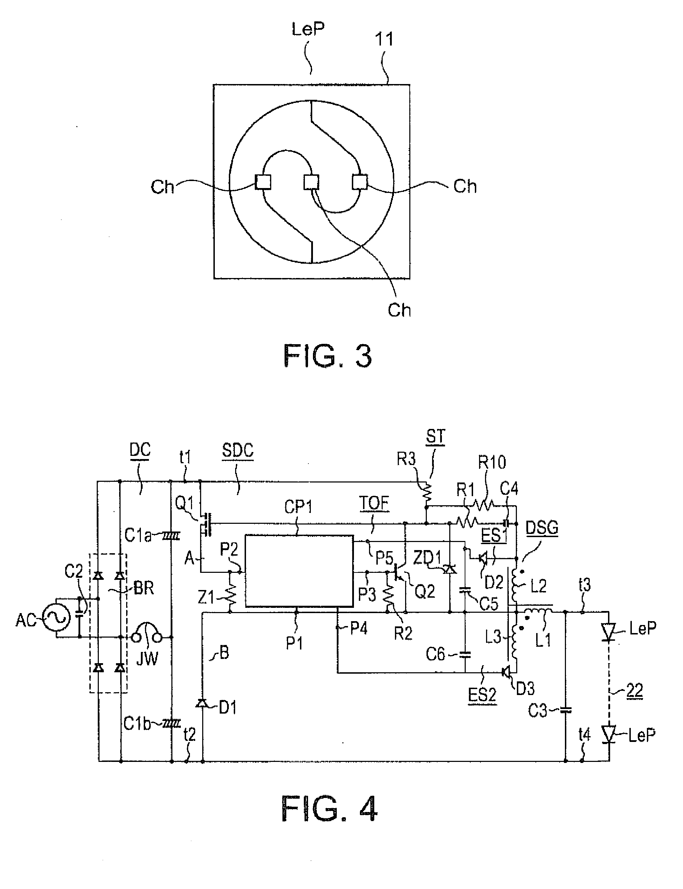

The seven LED packages LeP are connected in series, as shown in Fig. 2. The LED packages LeP are connected across the output capacitor C3 of the LED lighting circuit 25 (See Fig. 4) as described below. Moreover, as shown in Fig. 3, each LED package LeP mounts and confines three LED chips Ch in the inside of a case 11, and connects the three LED chips Ch in series.

Each LED package LeP is provided with: an unillustrated bare chips Ch that emits, for example, light of blue color; and an unillustrated resin portion that is formed of material such as silicon resin covering the bare chips Ch. The resin portion contains an unillustrated fluorescence substance that is excited by part of the blue light emitted from the bare chips Ch to mainly emit light of yellow color that is the complementary color of the blue color, with the result that each LED package generates light of a white color.

The LED power device 25 is contained in the case 24. Fig. 4 illustrates the circuitry of LED power device 25.

Fig. 4 is a circuit diagram showing a first embodiment of an LED power device.

The LED power device includes a DC power source DC, a step-down chopper SDC, LED packages LeP, a self-excited drive circuit DSG and a turn-off circuit TOF. The self-excited drive circuit DSG and the turn-of f circuit TOE constitute a self-excited drive circuit. In addition to these components, a start-up circuit ST is provided.

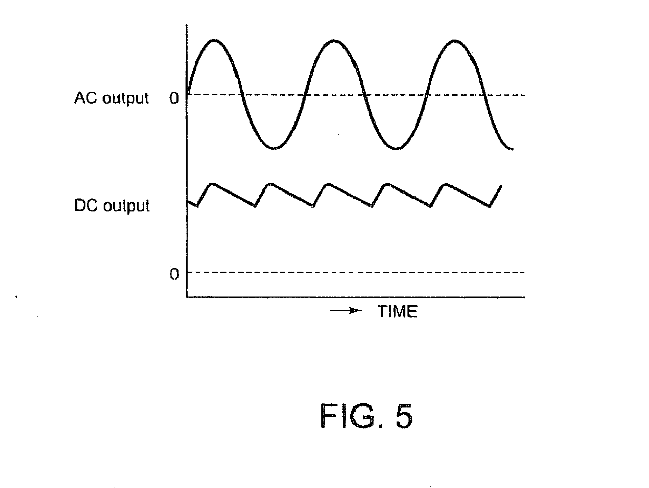

The DC-power source DC is provided with: a voltage doubler rectifier circuit whose input terminals are connected to an alternating-current power supply AC such as a commercial alternating-current power supply having, for example, a rated voltage of 100V; and smoothing capacitors C1a and C1b. The smoothing capacitors C1a and C1b are connected in series with each other to the output terminals of a bridge rectifier circuit BR. A jumper wire JW which is an example of a select element or a jumper resistor of 0Ω is connected between the bridge rectifier circuit BR and the interconnection between the smoothing capacitors C1a and C1b. Therefore, as shown in Fig. 5, the output voltage of the DC-power source is 200V, around twice the effective value of the power supply AC voltage. A capacitor C2 that is connected to the input terminals of the voltage doubler rectifier circuit BR provides noise reduction.

The step-down chopper SDC is provided with: input terminals t1 and t2 connected to the DC power source DC; output terminals t3 and t4 connected to a load; a switching element Q1; a first circuit A that includes impedance Z1 and a first inductor L1 connected in series and that is connected between the input terminal t1 and the output terminal t3; and a second circuit B that includes the first inductor L1 and a diode D1 connected in series and that is connected between the output terminals t3 and t4. An output capacitor C3, serving as a smoothing capacitor, is connected between the output terminals t3 and t4.

The switching element Q1 of the step-down chopper SDC is formed with a FET (field effect transistor); the drain and the source thereof are connected to the first circuit. A. The first circuit A forms the charging circuit of the first inductor L1 via the output capacitor C3 and/or a load circuit which will be described later; the second circuit B and the diode D1 form the discharging circuit of the first inductor L1 via the first inductor L1 and the output capacitor C3 and/or the load circuit which will be described later, respectively. Although the impedance Z1 is formed with a resistor, an inductor or a capacitor having a resistance component of appropriate magnitude can be used as desired.

A plurality of LED packages are used, these LED packages are connected in series to form the load circuit and this load circuit is connected to the output terminals t3 and t4 of The step-down chopper SDC.

The self-excited drive circuit DSG is provided with a second inductor L2 that is magnetically coupled with the first inductor L1 of the step-down chopper SDC. A voltage induced in the second inductor L2 is applied, as a drive signal, between the control terminal (gate) and the drain of the switching element Q1, with the result that the switching element Q1 is kept on. The other terminal of the second inductor L2 is connected via the impedance Z1 to the source of the switching element Q1.

In addition to the configuration described above, in the self-excited drive circuit DSG, a series circuit composed of a capacitor C4 and a resistor R1 is interposed in series between one end of the second inductor L2 and the control terminal (gate) of the switching element Q1. A Zener diode ZD1 is connected between the output terminals of the self-excited drive circuit DSG, and thus an overvoltage protection circuit is formed so as to prevent the switching element Q1 from being damaged by the application of an overvoltage between the control terminal (gate) and the drain of the switching element Q1.

The turn-off circuit TOF is provided with a comparator CP1, a switching element Q2 and first and second control circuit power supplies ES1 and ES2. The terminal P1 of the comparator CP1 is a terminal on the side of the base potential 1 of a reference voltage circuit inside the comparator CP1 and is connected to the connection point between the impedance Z1 and the first inductor L1. The reference voltage circuit is provided within the comparator CP1; it receives, from the second control circuit power supply ES2, power at a terminal P4 to generate a reference voltage and applies the reference voltage to the non-inverting input terminal of an operational amplifier within the comparator CP1. A terminal P2 is the input terminal of the comparator CP1 and is connected to the connection point between the first switching element Q1 and the impedance Z1, and thus an input voltage is applied to the inverting input terminal of the operational amplifier of the comparator CP1. A terminal P3 is the output terminal of the comparator CP1 and is connected to the base of the switching element Q2, and thus an output voltage is applied from the comparator CP1 to the switching element Q2. A terminal P5 is connected to the first control circuit power supply ES1, and thus control power is supplied to the comparator CP1.

The switching element Q2 is formed with a transistor. Its collector is connected to the control terminal of the first switching element Q1 and its emitter is connected to the connection point between the impedance element Z1 and the first inductor L1. Therefore, when the switching element Q2 is turned on, the output terminals of the self-excited drive circuit DSG are short-circuited, with the result that the switching element Q1 is turned off. A resistor R2 is connected between the base and the emitter of the switching element Q2.

In the first control circuit power supply ES1, a series circuit composed of a diode D2 and a capacitor C5 is connected across the second inductor L2. With a voltage induced by the second inductor L2 when the first inductor L1 is charged, the capacitor C5 is charged through the diode D2, and a positive potential is output From the connection point between the diode D2 and the capacitor C5 such that a control voltage is applied to the terminal P5 of the comparator CP1.

In the second control circuit power supply ES2, a series circuit composed of a diode D3 and a capacitor C6 is connected across a third inductor L3 that is magnetically coupled to the first inductor L1. With a voltage induced by the third inductor L3 when the first inductor LI is discharged, the capacitor C6 is charged through the diode D3, and a positive voltage is output from the connection point between the diode D3 and the capacitor C6 such that a control voltage is applied to the reference voltage circuit of the comparator CP1 and the reference voltage is generated in the reference voltage circuit.

The start-up circuit ST is composed of: a series circuit consisting of a resistor R3 connected between the drain and the gate of the first switching element Q1, and a parallel circuit including the resistor R1 and capacitor C4 of the self-excited drive circuit DSG connected in parallel with a resistor R10; and a series circuit consisting of the second inductor L2 and the output capacitor C3 in the second circuit B of the step-down chopper SDC and/or the LED packages in the load circuit. When the DC power source DC is turned on, a positive start-up voltage determined largely by the ratio between the resistance of the resistor R3 and the resistance of the resistor R10 is applied to the gate of the first switching element Q1, with the result that the step-down chopper SDC is started up.

The operation of the circuit of the LED power device will now be described.

Synthetic electrostatic capacitance of the smoothing capacitors C1a and C1b is a comparatively low value.

When the DC power source DC is turned on, and the step-down chopper SDC is started up by the start-up circuit ST, the switching element Q1 is turned on, and a linearly increasing current starts flowing from the DC power source DC within the first circuit A through the output capacitor C3 and/or the LED packages in the load circuit. This increasing current allows a voltage whose positive polarity is on the side of the capacitor C4 to be induced in the second inductor L2 of the self-excited drive circuit DSG, and this induced voltage at lows a positive voltage to be applied to the control terminal (gate) of the switching element Q1 through the capacitor C4 and the resistor R1, with the result that the switching element Q1 is kept on and that the increasing current continues to flow. At the same time, the increasing current causes a voltage drop in the impedance Z1, and the dropped voltage is applied, as an input voltage to the terminal P2 of the comparator CP1 in the turn-off circuit TOE.

As the current increases, the input voltage of the comparator CP1 increases and then exceeds the reference voltage, with the result that the comparator CP1 is operated and this generates a positive output voltage at the terminal P3. Consequently, since the switching element Q2 in the turn-off circuit TOF is turned on, and thus the output terminals of the self-excited drive circuit DSG are short-circuited, the switching element Q1 of the step-down chopper SDC is turned off, and thus the current is interrupted.

When the switching element Q1 is turned off, electromagnetic energy stored in the first inductor L1 is discharged, with the result that a decreasing current starts flowing within the second circuit B including the first inductor L1 and the diode D1 through the output capacitor C3 and/or the LED packages in the load circuit. This decreasing current allows a voltage whose negative polarity is on the side of the capacitor C4 to be induced in the second inductor L2 of the self-excited drive circuit DSG, and this induced voltage allows a negative potential to be applied to the capacitor C4 through the Zener diode ZD1 and also allows a zero potential to be applied to the control terminal (gate) of the switching element Q1, with the result that the switching element Q1 is kept off and that the decreasing current continues to flow.

When the discharge of the electromagnetic energy stored in the first inductor L1 is completed, and then the decreasing current reaches zero, a back electromotive force is generated in the first inductor L1, and thus the voltage induced in the second inductor L2 is reversed and the side of the capacitor C4 becomes positive. Hence, when this induced voltage allows a positive voltage to be applied to the control terminal (gate) of the switching element Q1 through the capacitor C4 and the resistor R1, the switching element Q1 is turned on again, and thus the increasing current starts to flow again.

Thereafter, the same circuit operation as described above is repeated, and the increasing current and the decreasing current are combined together, and thus a triangular load current flows, with the result that the LED packages LeP in the load circuit LC are lit. In addition, in this embodiment, a voltage depression of the LED chip Ch at the time of lighting is 3V. Then, the voltage depression of one LED package LeP is set to 9V. Therefore, the terminal voltage of the output capacitor C3 is controlled so that the voltage depression of the LED light source 22 is set to 63V.

To achieve the foregoing, the proportion of the fifth harmonic of the input current waveform of the step-down chopper SDC is kept at 60% or less, and the voltage of the smoothing capacitors C1a and C1b is kept higher than the voltage of the output capacitor C3 over the entire range of an alternating-current voltage period, with the result that the harmonic of the input current is reduced, Lhe step-down chopper SDC is stably operated during the entire Lime period of the alternating-current voltage period and it is possible to prevent the LED packages LeP from flickering.

In the above-described circuit operation, the operation of the turn-off circuit TOE is performed in two stages, one done with the comparator CP1, the other done with the switching element Q2, and thus, even if the input voltage of the comparator CP1 is 0.3 volts or less, stable and accurate operation is achieved. This makes it possible to reduce the resistance of the impedance Z1, and thus, even when an input voltage is 0.5 volts in the conventional technology, with the present invention, it is possible to reduce the power loss of the impedance Z1 by 40% or more as compared with the conventional technology.

Since the temperature characteristic of the turn-off circuit TOF is determined by the side of the comparator CP1, and thus a desired satisfactory temperature characteristic can be provided for the comparator CP1, the conventional problem in which the temperature characteristic is attributable to the temperature characteristic of the switching element Q2 is solved. Since, with respect to the temperature characteristic of the comparator CP1, for example, as the Zener diode used in the reference voltage circuit of the comparator CP1, it is easy to select the Zener diode whose temperature characteristic is slightly negative or flat, such a characteristic can be given as the temperature characteristic of the comparator CP1. Thus, it is possible to obtain an LED power device with a satisfactory temperature characteristic.

Moreover, the provision of the comparator CP1 in the turn-off circuit TOF allows the switching element Q2 to operate stably and accurately, and this reduces variations in the output of the LED power device.

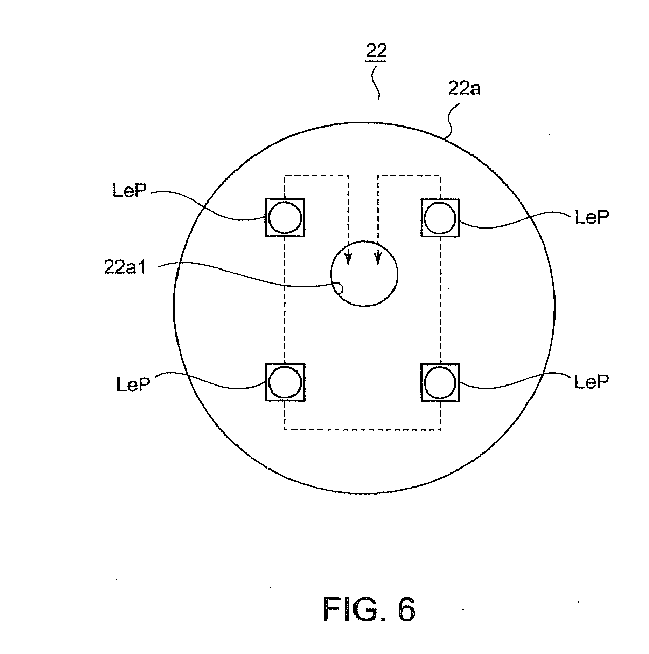

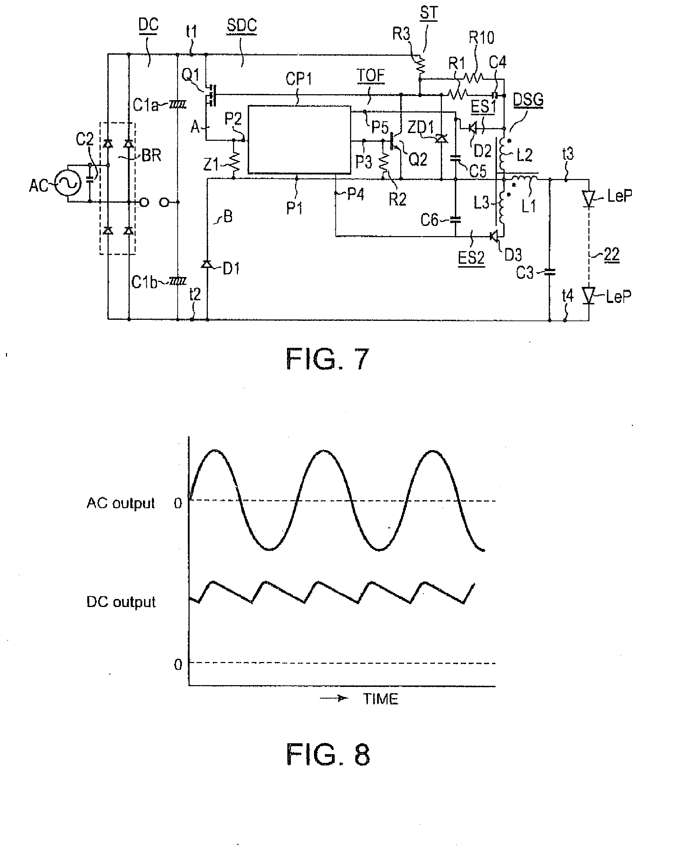

Figs. 6-8 illustrate a second embodiment for embodying an LED power device. In the embodiment, the same parts as Fig. 2 and 4 are identified with common symbols, and their description will be omitted. This embodiment mainly differs from the first embodiment in that a full-wave rectifier circuit BR is used as the DC-power source. And that is, the jumper wire JW in Fig. 4 is removed. For this reason, as shown in Fig. 8, the output Voltage of the DC-power source is 100V.

The LED light source includes four LED packages LeP connected in series. In addition, in this embodiment, the voltage depression of the LED chip Ch at the time of lighting is 3V. Then, the voltage depression of one LED package LeP is 9V. Therefore, the terminal voltage of the output capacitor C3 is controlled so that the voltage depression of the LED light source 22 is set to 36V.

To achieve the foregoing, the voltage of the smoothing capacitors C1a and C1b is kept higher than the voltage of the output capacitor C3 over the entire range of an alternating-current voltage period, with the result that the harmonic of the input current is reduced, the step-down chopper SDC is stably operated during the entire time period of the alternating-current voltage period and it is possible to prevent brightness of flickering of LED packages LeP.

Each above-mentioned embodiment has the following functional effect.

The LED chips are connected in a series circuit. So, even if the value of the Vf characteristic in the plurality of LED chips varies, the variation has little influence. Therefore, margin of error management of the value of Vf characteristic of the LED chips becomes easy.

Since the LED chips of the LED packages are connected in series, the drive current of these embodiments is related to the inverse of the number of LED chips, as compared with the case that the LED chips are connected in parallel. Also, the generation of heat inside the LED power device is proportional to the square of the drive current. Therefore, circuit efficiency improves, in order that the quantity of heat generated in LED lighting equipment may decrease.

Also, the temperature of the LED power device is about half compared with the case that the LED chips are connected in parallel.

As a result, the life of the LED light source and LED power device increases. Moreover, the reliability of LED power device improves.

In addition, the temperature under operation in the LED power device cannot rise easily. Therefore, less heat needs to be dissipated.

In addition, the LED light source of the embodiments is safe, because all of the LED chips turn off if any of the LED chips becomes faulty in an open mode. When the LED chips are connected in parallel, the remaining LED chips continue to generated heat.

In addition, it is possible to switch between the first and second embodiments of the DC-power source or/and the step-down chopper adding or removing the jumper wire JW of the DC power source.

While certain embodiments have been described, these embodiments have been presented by way of example only, and are not intended to limit the scope of the inventions. In practice, the structural elements can be modified without departing from the spirit of the invention. Various embodiments can be made by properly combining the structural elements disclosed in the embodiments. For example, some structural elements may be omitted from all the structural elements disclosed in the embodiments. Furthermore, structural elements in different embodiments may properly be combined. The accompanying claims and their equivalents are intended to cover such forms or modifications as would fall with the scope and spirit of the inventions.

## Claims

1. An LED lighting equipment, comprising:
a lighting main body (21);
an LED power device (25) mounted on the lighting main body (21) and having a DC power source (DC) and a DC-DC converter having an input terminal (t1, t2) connected to the DC power source (DC) and the DC-DC converter having an output terminal (t3, t4); and
an LED light source (22) having a board (22a) and a plurality of LED packages (LeP), each including an plurality of LED chips (Ch) connected in series, the LED packages being mounted on the board (22a) and connected in series to the output terminal (t3, t4) of the DC-DC converter.

2. The LED lighting equipment according to claim 1, wherein:
the LED power device (25) includes an output capacitor (C3) connected to the output terminal (t3, t4) of the DC-DC converter;
the DC power source (DC) includes a voltage doubler rectifier circuit having a rectification circuit (BR) and a smoothing capacitor (C1a, C1b),
the DC-DC converter is a step-down chopper (SDC) including a switching element (Q1), a first circuit (A), and a second circuit (B),
the first circuit (A) is connected between the input terminal (t1, t2 of the DC-DC converter and the output terminal (t3, t4) of the DC-DC converter, which includes an inductor (L1) connected to the switching element (Q1) in series,
the second circuit (B) is connected with the output terminal (t3, t4) of the DC-DC converter, which includes a series circuit of the inductor (L1) and a free-wheel diode (D1), and
the output capacitor (C3) so operate that the operating voltage of the output capacitor (C3) is lower than an operating voltage of the smoothing capacitor (C1a, C1b) during operation.

3. The LED lighting equipment according to claim 1, wherein:
the LED power device (25) includes an output capacitor (C3) connected to the output terminal (t3, t4) of the DC-DC converter,
the DC power source (DC) includes a full-wave rectifier circuit having a rectification circuit (BR) and smoothing capacitor (C1a, C1b),
the DC-DC converter is a step-down chopper (SDC) including a switching element (Q1), a first circuit (A), and a second circuit (B),
the first circuit (A) is connected between the input terminal (t1, t2) of the DC-DC converter and the output terminal (t3, t4) of the DC-DC converter, which includes an inductor (L1) connected to the switching element (Q1) in series,
the second circuit (B) is connected with the output terminal (t3, t4) of the DC-DC converter, which includes a series circuit of the inductor (L1) and a free-wheel diode (D1), and
the output capacitor (C3) so operate that the operating voltage of the output capacitor (C3) is lower than an operating voltage of the smoothing capacitor (C1a, C1b) during operation.

4. The LED lighting equipment according to claim 1, wherein:
the LED power device (25) includes an output capacitor (C3) connected to the output terminal (t3, t4) of the DC-DC converter;
the DC power source (DC) includes a full-wave rectifier circuit and a voltage doubler rectifier circuit each having a rectification circuit (BR), a smoothing capacitor (C1a, C1b) and selection element (JW) for activating one of the rectifier circuits,
the DC-DC converter is a step-down chopper (SDC) including a switching element (Q1), a first circuit (A), and a second circuit (B),
the first circuit (A) is connected between the input terminal (t1, t2) of the DC-DC converter and the output terminal (t3, t4) of the DC-DC converter, which includes an inductor (L1) connected to the switching element (Q1) in series,
the second circuit (B) is connected with the output terminal (t3, t4) of the DC-DC converter, which includes a series circuit of the inductor (L1) and a free-wheel diode (D1), and
the output capacitor (C3) so operate that the operating voltage of the output capacitor (C3) is lower than an operating voltage of the smoothing capacitor (C1a, C1b) during operation.
